# EUROPEAN PATENT SPECIFICATION

(11) **EP 3 375 401 B1**
(45) Date of publication and mention of the grant of the patent: **01.04.2020**
(21) Application number: 16713493.1
(22) Date of filing: 11.02.2016
(51) Int. Cl.: A61C 1/08

(54) **TEMPLATE AND METHOD FOR PLANNING THE SURGERY OF DENTAL IMPLANTS AND/OR GUIDED PLACEMENT OF A PROSTHESIS ON IMPLANTS**
SCHABLONE UND VERFAHREN ZUR PLANUNG DER CHIRURGIE VON ZAHNIMPLANTATEN UND/ODER ZUR GEFÜHRTEN EINSETZUNG EINER PROTHESE AUF IMPLANTATEN
ATTELLE ET PROCÉDÉ POUR LA PLANIFICATION DE LA CHIRURGIE D'IMPLANTS DENTAIRES ET/OU DU PLACEMENT GUIDÉ DE PROTHÈSE SUR IMPLANTS

(30) Priority: 12.11.2015 ES 201531638
(43) Date of publication of application: 19.09.2018
(73) Proprietor: I2 Implantologia, S.L., 28006 Madrid (ES)
(72) Inventor: CUADRADO DE VICENTE, Luis, 28006 Madrid (ES)
(74) Representative: Herrero & Asociados, S.L.
(86) International application number: PCT/ES2016/070080
(87) International publication number: WO 2017/081337

(56) References cited:
- EP-A1- 2 425 796
- WO-A1-2009/027316
- WO-A1-2011/112454
- WO-A2-2013/010138
- JP-A- 2006 341 067
- US-A1- 2008 166 681
- US-A1- 2008 193 896
- US-A1- 2011 123 946

## Description

### OBJECT OF THE INVENTION

The present invention relates to a splint intended to be placed in the mouth of the patient and which serves for planning the surgery of the different dental implants as well as the subsequent placement of the prostheses on said implants.

More specifically, the splint of the invention has a design such that it can be fixed to the soft tissue or oral mucus of the upper or lower jaw of the patient in order to be scanned and which also comprises a material detectable by means of radiological examinations, providing information on the future position of the dental pieces of the final prosthesis of the patient.

The invention also encompasses both the method for planning the guided surgery for the placement of dental implants as well as the method for planning the final prosthesis which will be placed on said implants of the patient, both based on the splint of the invention.

### BACKGROUND OF THE INVENTION

As is known, the field of odontology and more specifically that of dental implantology has experienced continuous development in recent years. This development is due, in large part, to the emergence of powerful software design tools and modern manufacturing systems which achieve surprising results both from an aesthetic point of view and from a functional point of view, all of which in a minimum time which allows the patients to recover the masticatory and aesthetic function in a short period of time.

Moreover, other advantages are derived from the use of these techniques, which include reducing the handcrafting component of odontology in those facets or aspects of the treatments in which accuracy and precision are crucial.

This is the particular case of planning the surgery for the placement of the dental implants and/or the design of the prostheses which will be placed on said implants, in which the use of digital techniques for taking data of the mouth of the patients has been transformed into an increasingly more widespread practice due to the high reliability thereof and good results.

This greater reliability and accuracy has only been possible following the integration and computerized treatment of the design and manufacturing processes in which both elements, software and hardware work with maximum accuracy.

Thus, generally the principal phases for dental rehabilitation with implants are the following:
- A first phase in which the implants are placed on the gums of the patient which serve as an anchor for the prostheses of the dental pieces which need to be replaced;
- A second phase of taking samples and measurements of the mouth of the patient based on which the dental models or replicas of the mouth are prepared with the implants already placed;
- A third phase in which, based on the model of the previous phase, the prosthesis intended to replace the dental piece is constructed and is fixed to the implant of the first phase and; lastly
- A fourth phase of placing the prosthesis in the mouth.

As is evident, the temporal development and the good functioning of the assembly formed by the implant and the prosthesis in the mouth of the patient depend, to a large extent, on the design and manufacturing of the prostheses and therefore on the manufacturing stage of the same, which starts with the taking of measurements of the mouth of the patient, which should be as accurate as possible.

However, until recently or even still today, in some very traditional odontological systems, both the planning of the surgery for the placement of the dental implants and the design of the prostheses which will be placed on said implants, started with an initial taking of an impression or obtaining data of the mouth of the patient completely manually, based on which a model of the mouth of the patient was obtained via which the prostheses were then designed.

More specifically, this known technique consists of making the patient bite a deformable silicone type material, via which the positions and shapes of the dental pieces are recorded or marked and especially the position of transfer elements which indicate the position of the implant on which the prosthesis will later be fixed. Normally, the physical models of the mouth are implemented in plaster and the replica of the implants in a metal alloy.

However, it is also known that this way of obtaining data is defective due both to the deformations produced when removing the deformable silicone type material from the mouth of the patient and during the demolding of the plaster model and due to the characteristics of the materials used, which have different tolerances and uneven degrees of contraction. All these defects of the method introduce errors into the position of the implants which result in a defective final placement of the implants in the mouth or even injurious to the patient.

With the aim of avoiding these errors, the use of laboratory scanners was introduced into said planning process, which digitized the plaster model created based on the traditional impression previously mentioned, which allowed the errors committed in the completely manual process previously described to be, in part, reduced.

This technique, although currently used, is not entirely recommendable since it still depends on the manual process of the taking of an impression, which means it suffers from a lack of appropriate precision which can result in a job that is not entirely satisfactory.

Thus, in order to solve this problem and minimize the errors in the taking of data as far as possible, intraoral scanners are used, which allow detailed digital information to be obtained both the geometry of the mouth itself as well as the geometry of the dental pieces and the implants which the patient may have placed. Subsequently, said information is transformed into a digital file with which, by way of the corresponding software, work can be carried out to create a digital model of the mouth of the patient which may subsequently become an accurate physical model by means of rapid prototyping technologies, milling, etc.

However, the current dental techniques go even further than mere digital recreation of the mouth of the patient in order to construct a mold via which to work or for the manufacture of the dental piece themselves, since they consist both of the planning for the surgery by means of so-called guided surgery (GS) systems or techniques by means of which the different dental implants are placed as well as the planning for the subsequent placement of the prostheses on said implants by means of so-called guided prosthesis (GP) systems.

Specifically, the current GS and GP systems are composed of software, which allows the virtual placement of dental implants in planning files which have been provided to this software. Furthermore, the prostheses, which are going to be placed on the patient upon completion of the real placement of the implants on the patient, can already be designed in many of these files and will be fixed to the same implants.

Therefore, it means that it is especially relevant for the process to have the highest accuracy or otherwise a clinical placement of defective implants will be carried out which may cause discomfort or even damage to the patient or, simply, the prostheses designed and prepared within this GS software cannot be placed upon completion of the real surgery.

In fact, the concept of guided surgery (GS) on implants itself is changing since, in reality, the only aim of placing the implants in a guided manner is to situate them in the optimal position which marks the future prosthesis of the patient and the majority of times, to be able to place said guided prostheses upon completing the implant placement intervention. Thus, the most correct way of referring to these new techniques would be systems for guided prosthesis on implants.

These new techniques are, therefore, based on an optimal acquisition of data in terms of being able to construct the digital model of the mouth of the patient as reliably as possible and planning both the surgery and the design of the prostheses.

Proving the importance of situating all the elements conveniently in the buccal space with the aim of creating a digital model faithful to the reality, techniques have been developed which aid in optimally positioning the implants already placed, for which radiopaque elements, well-positioned on the implants, are used or are even introduced into said implants such that they are detected in radiological examinations and the position thereof can be perfectly determined by the software used for treating the data. Examples of some of these techniques may be seen, for example in ES 2364393 or ES 2431313.

However, in terms of planning both the surgery and the design of the prostheses, only techniques which combine digital images obtained by means of different systems are used. More specifically, images obtained, on the one hand, by means of radiological techniques (RX, TAC, CBCT, etc.) are combined, on the other hand, with those obtained by means of superficial scanners. Thus, once all the information is obtained, the system combines or aligns the different types of images obtained with those two systems with the aim of achieving an optimal fit (best fit) with respect to each other, with which an exact virtual model of the mouth of the patient is subsequently created, not only at an external level (morphology of the buccal cavity, gums, existing piece, etc.), but also of the maxillofacial structure and the bone tissue of said patient.

The work flow of these techniques is thus generally the following:
1. Acquiring data of the mouth of the patient by means of:
   a. A scan to obtain the data of the gum, implants and existing pieces in the mouth of the patient which generates 3D STL type files or similar.
      As already mentioned, this may be carried out in two ways:
      i. Obtaining conventional impressions in order to make a plaster model of the mouth of the patient and subsequently scanning said model in the dental laboratory; or
      ii. Using an intraoral scanner.
   b. A radiological examination (RX, TAC, CBCT, etc.) in order to obtain information regarding the bone structure of the patient.
2. Combining or aligning (best fit) of the files obtained by means of the previous techniques in order to create an as accurate as possible virtual model.
   This alignment of the files, also referred to as "best fit", is carried out either manually by the technician/dentist or automatically if the software allows it. In both cases, said alignment is based on the search for common points between the images obtained radiologically or by means of the scanner such that the system can superimpose them or the system carries out stitching/matching of the images in order to compose the final complete image. These common points can be dental pieces, the implants themselves or parts of the implants, etc.

However, even leaving to one side the cases in which the data are not fully accurate if scanning is carried out on the plaster model previously indicated (see point 1.a.i), these modern techniques still suffer from various significant drawbacks which mean that the result is not optimal.

On the one hand, one of the reasons which leads to a result which is not optimal is that the alignment phase of the different digital files (best fit) is erroneous due to the fact that the developments of implantological planning software cannot properly carry out the alignment in the cases in which there are few reference elements which occurs when the patient has very few dental pieces.

This is principally due to the fact that continuous areas of the mouth of the patient with the same tonality and without irregularities, such as for example a gum area, do not provide sufficient information so that during the scan the system can discriminate between similar close points and carry out stitching/matching correctly in each one of the images obtained by the scanner, obtaining a final distorted virtual image, and consequently a subsequent incorrect alignment with the virtual image originating from the radiological examination.

In addition, an even more unfavorable case is when the patient is completely edentulous, that is to say, they do not have any dental piece in their mouth. In these conditions, it is practically impossible to obtain an accurate image by way of the scanner that can subsequently be aligned with the radiological images. In other words, the digital image obtained by means of the scanner does not contain information or any reference points, which allow the program or technician/dentist to align this image with the one, obtained radiologically in order to obtain a complete digital model, which allows the planning of the surgery for placing the implants.

To date, in the state of the art, this problem has been solved principally by hand and consequently with little precision. For this reason, the results obtained for these types of patients are very poor.

Specifically, the method currently used consists of implementing a prosthesis in resin in the mouth of the patient by the traditional method previously described. Markers detectable by means of radiological examinations are added to this prosthesis. Subsequently, two radiological examinations, one separately on the prosthesis and another on the mouth of the patient with the prosthesis placed are carried out. Given that the two files have the markers as common elements, it is now possible to carry out the alignment of the two digital images.

However, the fact that only radiological images are used is detrimental to the precision, since the files obtained based on the radiological examinations are less precise and accurate than the STL type files which the scanners provide. For this reason, the splint for the guided surgery which is obtained based on the digital images obtained only by means of the radiological examinations is also less precise.

In addition, as is evident, the lack of accuracy caused by the use of manual impression is added to the foregoing due to the previously mentioned problems inherent to this technique.

### DESCRIPTION OF THE INVENTION

The splint and method for planning dental implant surgery and/or guided placement of prostheses on implants of the present invention solves the previously cited problems of the state of the art and also constitutes a versatile working tool and method, adaptable to each user and personalizable, therefore it achieves a high degree of precision and optimal results.

The splint and method for planning dental implant surgery and/or guided placement of prostheses on implants of the present invention is according to claims 1 and 3 respectively.

Specifically, owing both to the splint and to the method of the invention, a new odontological protocol is established, both for guided dental implant surgery and for the dental prosthesis design.

More specifically, the splint of the invention is intended to be fixed temporarily to the upper or lower jaw of the patient and comprises at least one element marking the future position of the prostheses of dental pieces which the patient will wear. Specifically, by positioning at least one marker element on the splint of the invention, there will be sufficient information regarding basic points of said design such as the vertical dimension, the occlusion and vestibular plane as well as the dental aesthetic position.

More specifically still, the vertical dimension relates to the space which the upper and lower teeth and gums occupy. Thus, if for example, the splint is only placed in the lower jaw, the upper one being absent, said lower splint also marks the vertical dimension which the upper one should occupy, that is to say, the space available below it. In other words, any of the two splints, upper or lower, marks the vertical space available.

In addition, the splint of the invention also provides information regarding the occlusion, that is to say, the way the upper teeth articulate with respect to the lower teeth.

Lastly, owing to the splint of the invention, the vestibular plane of the teeth is defined, since the position of the external face of the marker element or the marker elements of the splint provide information on the dental arch or position which the teeth should occupy in the anteroposterior direction (or in other words, vestibule - lingual) and it is also limited by the vertical dimension and the occlusion.

In other words, when the splint of the invention has elements marking the position of the future pieces, it provides information regarding the space which each dental arch (gum and teeth) occupies at the same time as informing the laboratory technician regarding the space which is available for placing the rest of the pieces and therefore how they are going connect with the pieces which the patient has in the other antagonistic jaw (occlusion) and the anteroposterior position of the same. Ultimately, the splint sends which space is to be restored and filled with teeth, therefore if the patient is complete edentulous, it will be necessary to mark the available space using two splints, one for each jaw.

In terms of marker elements, in the case of there being several, they are related to each other by way of a joining area which ensures that the relative position of them does not vary as a result of the manipulation thereof and wherein said joining area also allows the fixing of the splint to the jaw of the patient. In addition, said joining area also in turn comprises a spatial reference system which, as is explained below, on the one hand, facilitates the taking of data and, on the other, serves as a control system for the accuracy of the result obtained.

Said marker elements also in turn comprise a radiopaque material, that is to say, detectable by means of radiological examinations such that, as is also explained below, the information which they provide regarding the position of the future prostheses which the client will wear is detectable by means of radiodiagnostic examinations.

Thus, once the splints have been created with the position of at least two dental pieces which the patient will wear in the future, the following method is followed:
- Fixing the splint at the joining area thereof to the upper jaw and/or to the lower jaw by way of removable fixing means;
- Carrying out a radiological examination or study of the jaw or jaws of the patient by means of CBCT, TAC or similar, obtaining a file which contains the information on the future position of the prostheses which the patient will wear indicated by the marker elements of the splint;

- Carrying out a scan of the mouth of the patient, either by means of a direct intraoral scanner or scanning a plaster model, in order to acquire images and data of the jaw and which therefore also contains the images of the splint of the invention with the corresponding marker elements thereof of the splint.
- Withdrawing the splint;
As a result, two digital files of the mouth of the patient are obtained:
- One file obtained by means of the radiological examination with the information regarding the bone tissue and, in the case that the patient has dental pieces or implants, also with these; and
- Another file obtained by means of the scanner with photographic information of the oral cavity with the different tissues, dental pieces or implants thereof if there are any.

In addition, owing to the splint of the invention, each one of these files contains information regarding the position of the future pieces of the patient, of the occlusion and the intermaxillary relation provided by the marker elements of the splint.

Both files are then imported to the guided surgery software program, which proceeds to the alignment or best fit of both files in order to create the complete three-dimensional digital image of the mouth of the patient including, owing to the marker elements of the splint, the final three-dimensional position of the dental pieces of the patient in terms of aesthetic, occlusion and vertical intermaxillary dimension which allows the prosthetist to carry out the correct implantological planning.

In addition, as was already said, the joining area of the splint to the jaw of the patient which in turn also constitutes the joining of the marker elements to each other comprises a spatial reference system which on the one hand facilitates the taking of data and on the other hand serves as a control system of the accuracy of the result obtained.

More specifically, said reference system facilitates the task of scanning since it constitutes an irregularity of the material of which the marker elements are composed, which allows the software of the system to more quickly identify each one of the points better than if it were a continuous element without marks as occurs with the gum itself of the patient, which as mentioned, presents few structural, tonal irregularities, etc. between immediately continuous points.

As is logical, the marker elements themselves also contribute to this more rapid and improved identification during scan, said elements being easily detectable by the scanner, especially, if, for example they are made in a different color to the rest of the elements, both the splint itself and the mouth of the patient.

Continuing with the dual use of the spatial reference system, in addition to facilitating the scan by "dehomogenizing" the surface to be scanned, they constitute a control system for the accuracy of the result obtained, since when checking the result of said scan, that is to say, the digital image of the mouth of the patient, it can also be checked whether or not said reference system appears distorted, both in the position thereof and in the shape thereof, which if it occurs, indicates that the scan has not been satisfactory and therefore the digital image obtained is not faithful to the reality, introducing errors which, if maintained, would give rise to an incorrect subsequent alignment (best fit) with the file originating from the radiological examination and consequently give rise to an erroneous final digital model of the mouth of the patient which would result in erroneous planning of the surgery and design of the prostheses.

Owing to the use of the splint and method of the present invention, it is thus possible to:
- Carry out a scan rapidly and reliably;
- Check that the files originating from the scan are correct and
- Carry out a perfect alignment (best fit) of the files originating from the scan and those from the radiological examination, even in the complex cases of patients with few or no (completely edentulous) dental pieces.

From there the prosthetist or surgeon can virtually plan the case with the help of the corresponding software, that is to say, they proceed with:
- The design of the provisional prostheses;
- The virtual placement of the implants and lastly, when everything is correct,
- Creating the virtual surgical splint which contains the elements necessary for safely milling the implants, these being in the planned position and therefore, being able to place the provisional prostheses designed in the first step.

Subsequently, said virtual surgical splint can be manufactured by means of any known system such as milling, rapid prototyping, etc., in order to start the real odontological treatment in the mouth of the patient.

### DESCRIPTION OF THE DRAWINGS

In order to complement the description and with the aim of aiding a better understanding of the characteristics of the invention, a set of drawings accompanies the present specification as an integral part thereof, in which the following is depicted in an illustrative and non-limiting manner:
Figure 1 shows a perspective view of the splint of the invention for the case in which it comprises three marker elements and is intended to be placed in the upper jaw as well as a detail of the spatial reference system situated on one of the arms of the joining area.
Figure 2 shows a schematic lower level view of the splint of the invention of Figure 1 placed on the jaw of the patient.

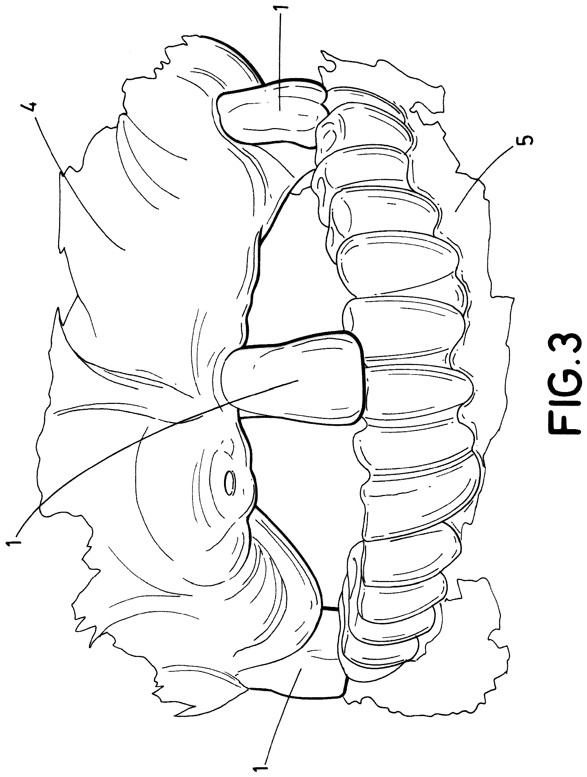

Figure 3 shows a schematic frontal elevation view of the mouth of the patient where the splint of the invention of Figure 1 is placed on the upper jaw and where it is observed how the latter defines the future placement of the prostheses and the occlusion on the lower jaw, which has its own dental pieces.
Figure 4 shows a schematic perspective view of the splint of the invention for the case in which it comprises three marker elements and is intended to be placed on the lower jaw as well as a detail of the spatial reference system situated on the skirt of the joining area.
Figure 5 shows a schematic upper level view of the splint of the invention of Figure 1 placed on the jaw of the patient.

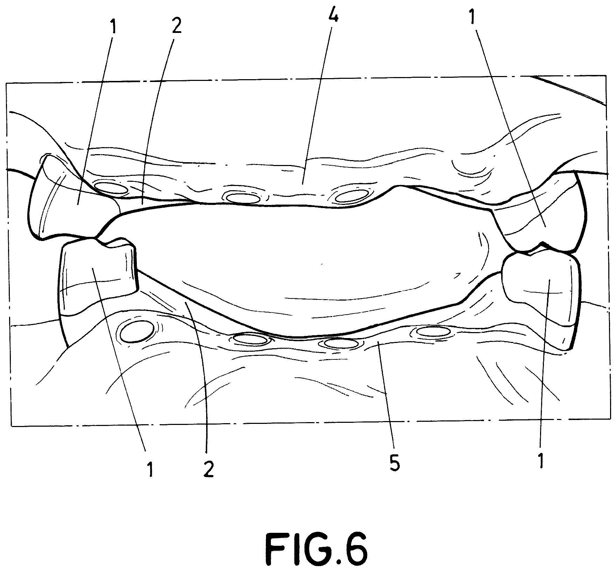

Figure 6 shows a schematic frontal elevation view of the mouth of the patient in the case in which both the upper jaw and the lower jaw have the splint of the invention.

### PREFERRED EMBODIMENT OF THE INVENTION

In view of the mentioned figures and according to the numeration adopted, a preferred exemplary embodiment of the invention may be observed in the figures, which comprises the parts and elements, which are indicated and described in detail below.

Specifically, as has already been said, the splint comprises at least one marker element (1) which provides information regarding the future position of other such prostheses, which the patient will wear and which may be made in different materials such as for example resin.

In order to be detected by the radiological examinations, these markers (1) also comprise a radiopaque material, such as for example barium sulfate which, mixed in a proportion by weight of, for example 10% homogeneously with the resin or the material in which the splint is manufactured, provides information relating to the vertical dimension, occlusion and vestibular plane as well as the aesthetic dental position.

In addition, according to a possible embodiment, not only the markers (1), but the entire splint may incorporate the homogeneously mixed radiopaque material in the composition thereof such that all of the splint is detectable during the radiological examination, which allows additional information to be obtained which, for example, allows the alignment between the files to be carried out, being based on other positions different to those which constitute the dental pieces to be restored.

According to the invention, said marker elements (1) are formed by geometric shapes such as a cylinder or a prism with a triangular, square section, etc. which owing to the well-defined vertices and edges thereof accurately mark the previously mentioned basic points of the design: vertical dimension, occlusion and vestibular plane as well as the aesthetic dental position.

Alternatively, said marker element or elements (1) may present the final shape of the tooth with which the prosthesis will subsequently be manufactured on the implant as is shown in the example shown in the figures.

The marker elements (1) are also related to each other by way of a joining area (2) which ensures that the relative position of these does not vary as a result of the manipulation, placement thereof in the jaw of the patient, etc.

Said joining area (2) fulfils, as has been said, a dual function since in addition to constituting the area between the marker elements (1), it is the area by way of which the splint is fixed to the upper (4) or lower (5) jaw of the patient during the radiological examination and scan.

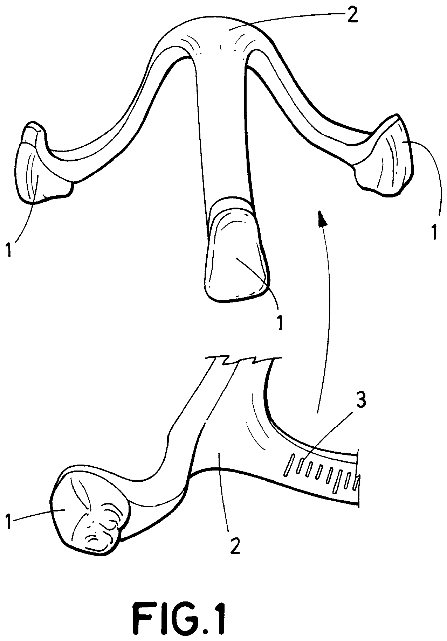

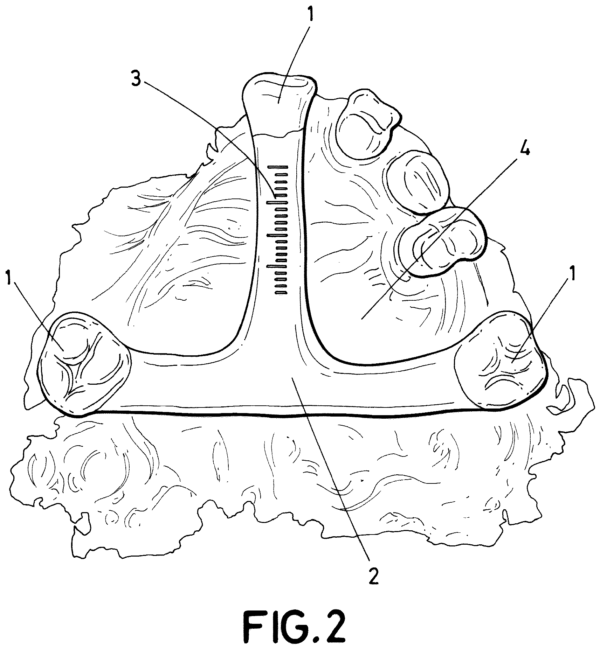

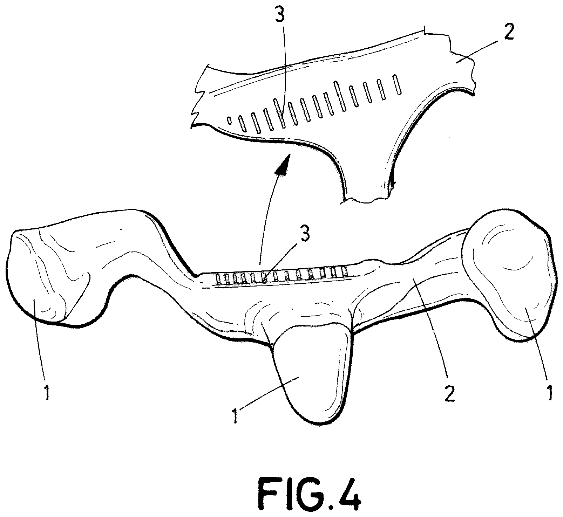

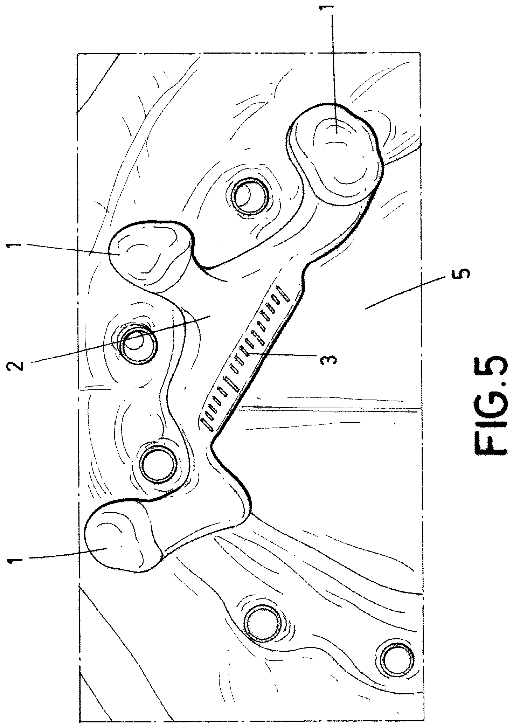

Thus, the joining area (2) presents a shape such that it guarantees a perfect fit on the soft tissue of both jaws (4, 5), specifically:
- In the case that the splint is intended to be fixed on the upper jaw (4) of the patient as is shown in particular in Figures 1 and 2, the joining area (2) presents, according to a preferred embodiment shown in the figures, one shape with arms which present the shape of a cross, star, etc., as a function of the number of marker elements (1) that said splint has.
- In the case that the splint is intended to be fixed on the lower jaw (5) of the patient, as is shown in particular in Figures 4 and 5, the joining area (2) presents, according to a preferred embodiment shown in the figures, a shape of a skirt intended to also be fitted on the soft tissue.

In both cases, the fixation of the splint and the jaw (4, 5) of the patient may be carried out, for example, with the aid of one or various osteosynthetic screws, "pins" or similar (not shown), provided that the stability thereof in the mouth is guaranteed. Similarly, another possibility is that of said fixation between the splint and jaw (4, 5) being carried out by means of adhesives for medical use of the cyanoacrylate type. Furthermore, these two fixing systems, screws and adhesives, may be combined to achieve optimal stability of the splint in the mouth.

In addition, the joining area (2), in turn, comprises a spatial reference system (3) intended both to facilitate the taking of data during the scan, enabling a better reading for the scanner as well as serving as a control system of the accuracy and correct dimensioning of the image obtained during said scan.

According to a preferred embodiment shown in the details of Figures 1 and 4, the spatial reference system (3) is formed by a graduated scale in any unit of length, for example millimeters, such that it enables checking as to whether in the digital image obtained, the proportion of said scale is maintained or whether it presents deformations or errors and, at the same time, owing to the irregularity which the scale itself presents in relation to the joining area (2) via which it is incorporated and/or the gum of the patient, it constitutes superficial heterogeneity which is easily detectable by the scanner.

The splint of the invention, may be manufactured in various manners, preferably including:
1.- Based on study models of the patient obtained with conventional impressions of the jaw of the patient in which a conventional design (an assembly of teeth) of the final prosthesis of the patient has been carried out, also in which:
   ∘ The pieces, which are not considered necessary for transmitting the previously indicated information, are removed, using only those strategically situated and which therefore contain said information.
   ∘ Subsequently, these pieces necessary for transmitting the information are replaced by the marker elements (1) with radiopaque material connected to each other by the joining area (2) in resin or similar.

   Thus, as has already been previously commented, the final design of the splint will depend on whether it is going to be situated on the upper jaw (4), in which case they will be arranged in the joining area (2) as a series of arms in the form of a cross, star, etc. depending on the number of marker elements (1).
   In the case that the splint is intended to be fixed on the lower jaw (5) of the patient, the joining area (2) presents, according to a preferred embodiment shown in the figures, a skirt shape also intended to be fitted on soft tissue.
2.- By means of the digital design based on a file originating from an intraoral or laboratory scanner, in which:
   ∘ Recordings are taken by means of an intraoral scanner, directly from the mouth of the patient and the splint of the invention is created on the computer by means of CAD design software with the same steps which have been described for the conventional way indicated in the previous point 1. In this case, the splint is printed by means of a 3D printer, laser sintering equipment, an external milling device, etc.; or
   ∘ Recordings are taken by means of a desktop or laboratory scanner. To this end, taking of conventional impressions is carried out and a study model is manufactured in plaster or resin. This will be subsequently scanned by means of the desktop scanner, thereby creating a file which can be imported to the CAD design software, the same flow being initiated as in the case of using the intraoral scanner from the previous point.

Furthermore, in both cases 1 and 2, as has been said, not only the marker elements (1), but the entire splint may incorporate the radiopaque material such that all of the splint is detectable during the radiological examination, which allows additional information to be obtained.

In addition, also in both manufacturing types or forms or in any other used, the relation between the marker elements (1), owing to the joining area (2), is carried out such that large free areas between said marker elements (1) are created, thus leaving the larger part of the gum uncovered in the mouth of the patient, where the implants are placed. In other words, the splint of the invention presents, as free of marker elements (1), those mucosal support areas on the mouth of the patient in which the implants, the prosthesis are going to be placed or where the implants previously placed are already located such that they do not pose any interference.

Once the splint(s) has/have been created, the method previously described is continued:
- Fixing the splint at the joining area to the upper jaw (4) and/or to the lower jaw (5) by way of removable fixing means;
- Carrying out a radiological examination or study of the jaw or jaws (4, 5) of the patient by means of CBCT, TAC or similar, obtaining a file which contains the information of the future position of the prostheses which the patient will wear indicated by the marker elements of the splint;
- Carrying out a scan of the mouth of the patient, either by means of a direct intraoral scanner or a scan of a plaster model, in order to acquire images and data of the jaw and which therefore also contain the images of the splint of the invention with the corresponding marker elements thereof of the splint;
- Checking whether the digital image obtained by scanning presents errors by means of the spatial reference system (3) of the splint;
- Obtaining two digital files of the mouth of the patient as a result, one by means of the radiological examination and another by means of the scanner and both with information regarding the position of the future pieces of the patient provided by the marker elements (1), files which will subsequently be aligned (best fit) in order to create the complete and accurate three-dimensional digital image of the mouth of the patient, which allows the prosthetist to carry out the correct implantological planning;
- Withdrawing the splint.

## Claims

1. A splint for planning dental implant surgery and/or guided placement of prostheses on implants that comprises:
- at least one marker element (1) formed by a geometric shape whose vertices and edges provide information regarding the vertical dimension of the dental arches, the occlusion and the vestibular plane as well as the aesthetic dental position of the patient, and wherein said marker element (1), in turn, comprises a radiopaque material detectable during a radiological examination;
- a joining area (2) for fitting on the soft tissue of the upper (4) or lower (5) jaw of the patient and which at the same time relates the marker elements (1) to each other in the case of there being several; and
- a spatial reference system (3) for facilitating the taking of data during the scan and serving as a control system of the accuracy of the digital image obtained based on said scan.
**characterized in that**
- all of the splint comprises radiopaque material detectable during the radiological examination and not only in the marker elements (1), and **in that**
- the spatial reference system (3) is formed by a graduated scale in one unit of length and situated on the joining area (2).

2. The splint according to claim 1, **characterized in that** the marker elements (1) present the final shape of the tooth with which the prosthesis will subsequently be manufactured on the implant.

3. A method for planning dental implant surgery and/or guided placement of prostheses on implants comprising the following steps:
- manufacturing and removeably fixing a splint according to any one of the preceeding claims 1 to 2 to the upper jaw (4) and/or to the lower jaw (5) of the patient using adhesives for medical use of the cyanoacrylate type;
- carrying out a radiological examination of the jaw or jaws (4, 5) of the patient in order to obtain a digital file which contains the information of the future position of the prostheses which the patient will wear indicated by the marker elements (1) of the splint;
- carrying out a scan in order to obtain another digital file with the digital images of the jaw or jaws (4, 5) of the patient which also contain the digital images of the splint with the marker elements thereof (1);
- checking whether the digital image obtained by the scan presents errors by means of the spatial reference system (3) of the splint in order to repeat the scan, if this is the case;
- aligning the digital files obtained by means of the previous radiological examination and the scan in order to create the three-dimensional digital image of the mouth of the patient;
- carrying out the implantological planning based on the three-dimensional digital image obtained based on the previous step; and lastly
- removing the splint from the upper (4) and/or lower jaw (5).

4. The method for planning dental implant surgery and/or guided placement of prostheses on implants according to claim 3, **characterized in that** the scan of the jaw or jaws (4, 5) of the patient is carried out by means of a direct intraoral scanner.

5. The method for planning dental implant surgery and/or guided placement of prostheses on implants according to claim 3, **characterized in that** the scan of the jaw or jaws (4, 5) of the patient is carried out on a plaster model.

6. The method for planning dental implant surgery and/or guided placement of prostheses on implants according to any one of the preceding claims 3 to 5, **characterized in that** the fixing of the splint on the jaw or jaws (4, 5) of the patient is carried out such that in the mouth of the patient, the areas where the implants, the prosthesis are placed or where the implants previously placed are already located are left uncovered such that they do not pose an interference.

## Patentansprüche

1. Eine Schablone zur Planung einer Zahnimplantatsoperation und/oder zur geführten Platzierung von Prothesen auf Implantaten, die folgendes umfasst:
- mindestens ein durch eine geometrische Form ausgebildetes
Markierungselement (1), dessen Vertices und Kanten
Information bezüglich der
vertikalen Abmessung der Zahnbögen, der Okklusion und der Vestibularebene sowie der ästhetischen Zahnposition des Patienten zur Verfügung stellt, und wobei
das Markierungselement (1) wiederum folgendes umfasst
ein strahlenundurchlässiges Material, das mit einer radiologischen Untersuchung nachgewiesen werden kann;
- eine Fügefläche (2) zur Anbringung auf dem Weichgewebe des Ober(4)- oder Unter(5)-kiefers des Patienten, die gleichzeitig die Markierungselemente (1) miteinander verbindet für den Fall, dass es mehrere sind; und
- ein räumliches Bezugssystem (3) zur Erleichterung der Datenaufnahme während des Scans und das als Kontrollsystem der Genauigkeit des Digitalbildes, das auf Grundlage des Scans erhalten wird, dient.
**dadurch gekennzeichnet, dass**
- die gesamte Schablone strahlenundurchlässiges Material, das während der radiologischen Untersuchung nachweisbar ist, umfasst, und nicht nur im Markierungselement (1), und dadurch dass
- das räumliche Bezugssystem (3) mittels einer Nummemskala in einer Längeneinheit ausgebildet ist und sich auf der Fügefläche (2) befindet.

2. Die Schablone gemäß Anspruch 1, **dadurch gekennzeichnet, dass** die Markierungselemente (1) die Endform des Zahns darstellen, mit der die Prothese anschließend auf dem Implantat angefertigt wird.

3. Ein Verfahren zur Planung einer Zahnimplantatsoperation und/oder zur geführten Platzierung von Prothesen auf Implantaten, das folgende Schritte umfasst:
- das Anfertigen und wiederentfernbare Fixieren
einer Schablone gemäß
einem der Ansprüche 1 bis 2 auf dem Oberkiefer(4) und/oder dem Unterkiefer(5) des Patienten mittels medizinischer Klebmittel vom Cyanoacrylat-Typ;
- das Durchführen
der radiologischen Untersuchung des Kiefers oder der Kiefer (4,5) des
Patienten, um eine Digitaldatei zu erhalten, die die Information zur zukünftigen Position der Prothesen, die der Patient tragen wird, auf den Markierungselementen (1) der Schablone angezeigt enthält;
- das Durchführen
eines Scans, um eine weitere Digitaldatei mit den Digitalbildern des Kiefers oder der Kiefer (4, 5) des Pateinten zu erhalten, die auch die Digitalabbilder der Schablone mit den zugehörigen Markierungselementen (1) enthält;
- das Überprüfen,
ob das mit dem Scan erhaltene Digitalbild Fehler aufweist mittels des räumlichen Bezugsystems (3) der Schablone, um den Scan zu wiederholen, falls das der Fall ist;
- das Abgleichen
der Digitaldateien, die mittels der vorangegangenen radiologischen Untersuchung und dem Scan erhalten wurden, um ein dreidimensionales Digitalabbild des Munds des Patienten zu erzeugen;
- das Ausführen
der Implantationsplanung auf Grundlage des aus dem vorherigen Schritt erhaltenen dreidimensionalen Digitalabbilds; und zum Schluss
- das Entfernen der Schablone vom Ober(4)- und/oder Unter(5)-kiefer.

4. Das Verfahren zur Planung einer Zahnimplantatsoperation und/oder zur geführten Platzierung von Prothesen auf Implantaten gemäß Anspruch 3, **dadurch gekennzeichnet, dass** der Scan des Kiefers oder der Kiefer (4, 5) des Patienten mittels eines direkten Intraoralscanners ausgeführt wird.

5. Das Verfahren zur Planung einer Zahnimplantatsoperation und/oder zur geführten Platzierung von Prothesen auf Implantaten gemäß Anspruch 3, **dadurch gekennzeichnet dass** der Scan des Kiefers oder der Kiefer (4, 5) des Patienten auf einem Gipsmodell durchgeführt wird.

6. Das Verfahren zur Planung einer Zahnimplantatsoperation und/oder zur geführten Platzierung von Prothesen auf Implantaten gemäß einem der vorhergehenden Ansprüche 3 bis 5, **dadurch gekennzeichnet, dass** die Fixierung der Schablone auf dem Kiefer oder den Kiefern (4, 5) des Patienten so ausgeführt wird, dass im Mund des Patienten die Bereiche, wo die Implantate, die Prothesen platziert werden oder wo sich die bereits zuvor platzierten Implantate bereits befinden unbedeckt gelassen werden, so dass sie keine Beeinträchtigung darstellen.

## Revendications

1. Attelle pour planifier une chirurgie d'implants dentaires et/ou un placement guidé de prothèses sur implants, qui comprend :
- au moins un élément (1) marqueur, formé d'une forme géométrique, dont les sommets et les bords procurent de l'information concernant la dimension verticale des arcades dentaires, l'occlusion et le plan vestibulaire, ainsi que la position dentaire esthétique du patient, et dans laquelle
l'élément (1) marqueur comprend à son tour un matériau impénétrable au rayonnement, détectable pendant un examen radiologique ;
- une région (2) de jonction pour s'adapter au tissu mou de la mâchoire supérieure (4) ou inférieure (5) du patient et qui, en même temps relie les éléments (1) marqueurs l'un à l'autre, dans le cas où ils sont plusieurs ; et
- un système (3) de référence spatial pour faciliter la prise de données pendant le scan et pour servir de système de réglage de la précision de l'image numérique obtenue sur la base dudit scan,
**caractérisée en ce que**
- toute l'attelle comprend du matériau impénétrable au rayonnement, détectable pendant l'examen radiologique, et non seulement les éléments (1) marqueurs, et **en ce que**
- le système (3) de référence spatial est formé d'une échelle graduée en une unité de longueur et située sur la région (2) de jonction.

2. Attelle suivant la revendication 1, **caractérisée en ce que** les éléments (1) marqueurs présentent la forme finale de la dent, avec laquelle la prothèse sera fabriquée ensuite sur l'implant.

3. Procédé de planification de la chirurgie d'implants dentaires et/ou du placement guidé de prothèses sur des implants, comprenant les stades suivants :
- fabrication et fixation de manière amovible d'une attelle suivant l'une des revendications 1 à 2 précédentes à la mâchoire (4) supérieure et/ou à la mâchoire (5) inférieure du patient, en utilisant des adhésifs à usage médical du type cyanoacrylate ;
- mise en œuvre d'un examen radiologique de la mâchoire ou des mâchoires (4, 5) du patient, afin d'obtenir un fichier numérique, qui contient l'information de la position future des prothèses que portera le patient, indiquée par les éléments (1) marqueurs de l'attelle ;
- effectuer un scan, afin d'obtenir un autre fichier numérique ayant les images numériques de la mâchoire ou des mâchoires (4, 5) du patient, qui contiennent aussi les images numériques de l'attelle avec ses éléments (1) marqueurs ;
- vérifier si l'image numérique obtenue par le scan présente des erreurs, au moyen du système (3) de référence spatial de l'attelle, afin de répéter le scan, si c'est le cas ;
- aligner les fichiers numériques obtenus au moyen de l'examen radiologique précédent et du scan, afin de créer l'image numérique en trois dimensions de la bouche du patient ;
- effectuer la planification implantologique sur la base de l'image numérique en trois dimensions obtenue sur la base du stade précédent ; et finalement
- retirer l'attelle de la mâchoire supérieure (4) et/ou de la mâchoire (5) inférieure.

4. Procédé pour la planification de la chirurgie d'implants dentaires et/ou du placement guidé de prothèses sur des implants suivant la revendication 3, **caractérisé en ce que** l'on effectue le scan de la mâchoire ou des mâchoires (4, 5) du patient au moyen d'un scanner intraoral direct.

5. Procédé pour la planification de la chirurgie d'implants dentaires et/ou du placement guidé de prothèses sur des implants suivant la revendication 3, **caractérisé en ce que** l'on effectue le scan de la mâchoire ou des mâchoires (4, 5) du patient sur un modèle en plâtre.

6. Procédé pour la planification de la chirurgie d'implants dentaires et/ou du placement guidé de prothèses sur des implants suivant l'une quelconque des revendications 3 à 5 précédentes, **caractérisé en ce que** l'on effectue la fixation de l'attelle sur la mâchoire ou les mâchoires (4, 5) du patient, de manière à ce que, dans la bouche du patient, les régions où les implants, la prothèse sont placés ou où les implants placés précédemment sont déjà localisés, soient laissés à découvert, de manière à ne pas créer une interférence.
